# DEMANDE DE BREVET EUROPEEN

(11) **EP 0 555 117 A1**
(43) Date de publication de la demande: **11.08.1993**
(21) Numéro de dépôt: 93400165.2
(22) Date de dépôt: 25.01.1993
(51) Int. Cl.: C08F 220/20

(54) **Résines vinylesters constituées d'un ou plusieurs monomères acryliques et d'au moins une macromolécule compatible et copolymérisable, et leurs utilisations**

(30) Priorité: 05.02.1992 FR 9201305
(71) Demandeur: APSA Société Anonyme, F-78190 Trappes (FR)
(72) Inventeur: Lapairy, Jean-Claude, F-60000 Bauvais (FR); Pierre, André, F-78760 Pontchartrain (FR)
(74) Mandataire: Kopacz, William James

(57) **Abrégé**

L'invention concerne des résines vinylesters constituées de un ou plusieurs monomères de la famille des acryliques, de paraffine et d'au moins un monomère de haute masse moléculaire compatible et copolymérisable à chaud ou à température ambiante, tels que les diméthacrylates de Bisphénol-A époxydés ou éthoxylés ou leurs dérivés, et ne comprenant pas d'eau. L'invention a également pour objet l'utilisation de ces résines vinylesters comme revêtement protecteur ou comme sol, ou encore comme matériaux d'objets moulés ou d'objets en stratifié.

## Description

L'invention concerne des résines "vinylesters consistant en l'association de un ou plusieurs monomères de la famille des acryliques avec au moins un monomère de haute masse moléculaire compatible et copolymérisable. Les résines vinylesters selon l'invention sont utilisables soit seules en tant que revêtement du type "gel-coat" ou "top-coat", ou comme vernis de protection, soit en association avec des fibres synthétiques ou minérales, soit encore comme liant d'agglomération pour la confection de bétons synthétiques en association avec des charges minérales et/ou organiques.

On désigne par résine vinylester une molécule organique comportant une fonction ester résultant de la réaction d'un acide organique carboxylique avec un alcool; la molécule ainsi obtenue comporte en outre au moins une terminaison vinylique, du nom du radical vinyle (-CH=CH₂) polymérisable.

On connaît dans l'art antérieur les résines polyesters remarquables par leur aptitude à polymériser à température ambiante. Ces résines se présentent essentiellement comme des dissolutions ou des mélanges de macromolécules, plus particulièrement de monomère de haut poids moléculaire, dans un solvant polymérisable, le styrène. La nature de ces macromolécules détermine les propriétés de la résine polymérisée; parmi ces monomères de haute masse moléculaire, on peut citer plus particulièrement le diméthacrylate de Bisphénol-A époxydé, lequel dissout dans le styrène apporte de très bonne propriétés de résistance à la chaleur et aux solvants.

L'inconvénient majeur des résines polyesters réside dans l'utilisation du styrène, lequel une fois polymérisé, possède une faible résistance à la chaleur et aux solvants et un mauvais vieillissement naturel. En outre, les vapeurs de styrène dégagées lors de son emploi sont cause de problèmes d'odeur et de toxicité parfois difficile à résoudre.

On connaît aussi dans l'art antérieur les résines acryliques; sous cette expression on désigne les compositions résultant de la polymérisation ou de la copolymérisation d'un ou plusieurs (métha)acrylates d'alkyles ayant de préférence 1 à 12 atomes de carbone dans le groupement alkyle du monomère.

A titre d'exemple de tels monomères, on peut citer notamment les esters d'alkyles des acides acryliques et méthacryliques dans lesquels le groupement alkyle dérive d'un alcool aliphatique et est notamment un groupement méthyle, éthyle, butyle, isobutyle, hexyle, heptyle, octyle, isooctyle, éthyl-2-hexyle.

Le plus couramment utilisé de ceux-ci est le méthacrylate de méthyle; mais sa volatilité et son système de polymérisation sensible à l'oxygène de l'air et à la température de mise en oeuvre font que ce type de résine est d'un emploi techniquement difficile et incommode.

L'expression résine acrylique s'entend aussi des produits résultant de la copolymérisation d'un ou plusieurs des monomères précités avec un monomère polymérisable portant ou non un groupement fonctionnel. A titre d'illustration de tels monomères, on peut citer les hydrocarbures aliphatiques ou aromatiques portant au moins une double liaison oléfinique, tel que notamment le styrène, les acides mono et di-carboxyliques porteurs d'une double liaison oléfinique tels que les acides (méth)acrylique, crotonique, maléïque, itaconique, fumarique; les esters vinyliques renfermant généralement 5 à 15 atomes de carbones tels que les esters vinyliques d'acides versatiques; les composés à groupement fonctionnel hydroxyle, tel que le (méth) acrylate d'hydroxy-2-propyle, le (méth)acrylate de mé- thyl-1 hydroxy-2 éthyle; les composés à groupement époxy tels que le (méth)acrylate de glycidyle; le N-méthylol(méth)acrylamide; les composés à groupement amino tels que le (méth)acrylate de N,N-dimé- thylaminoéthyle, le (méth)acrylate de N-tertiobutyla- minoéthyle, le (méth)acrylate de N-tertiobutylamino- butyle. Parmi les monomères polymérisables portant un groupement fonctionnel, on peut encore citer des monomères réticulants du type (méth)acrylate d'allyle, comme les (méth)acrylates silanés, hydroxylés ou chlorés.

Un autre inconvénient des résines acryliques réside dans la difficulté de maîtriser les problèmes de réactivité et de retrait de polymérisation.

Il convient cependant de remarquer que la bonne tenue au vieillissement des résines acryliques et la variété des monomères en font une famille très intéressante en ce qui concerne les caractéristiques des produits obtenus après polymérisation; mais aucune des résines vinylesters ou acryliques précédemment citées ne réunit simultanément les propriétés de bonne tenue thermique et chimique, de bonne réactivité et d'excellent vieillissement.

L'invention vise précisément à fournir des résines vinylesters présentant de tels avantages; ce but est atteint grâce aux nouvelles compositions de résines vinylesters selon l'invention, consistant en l'association de un ou plusieurs monomères de la famille des acryliques avec au moins un monomère de haute masse moléculaire compatible et copolymérisable, et dépourvue d'eau.

Les résines vinylesters de l'invention contiennent de la paraffine destinée à constituer un film protecteur lors d'une polymérisation à l'air. Dans le cas d'une polymérisation en atmosphère d'azote, la paraffine n'est pas nécessaire.

De manière avantageuse, le monomère de haute masse moléculaire compatible est copolymérisable à chaud ou à température ambiante.

Les résines vinylesters de l'invention associent les propriétés de un ou plusieurs monomères de la famille des acryliques à celles d'au moins un monomère de haute masse moléculaire compatible et copolymérisable, qui apporte :
- une excellente tenue en température
- une très bonne résistance chimique
- une aptitude à polymériser par un faible retrait et une rapidité satisfaisante.

En outre les résines vinylesters de l'invention présentent l'intérêt de n'être pas toxique pour la personne les utilisant, elles n'ont pas ou peu d'odeur ce qui permet de les utiliser dans des lieux clos, et plus particulièrement dans des lieux ou toute pollution doit être exclue; enfin, leurs vapeurs ne pénetrent pas les tissus.

Les monomères de haute masse moléculaire permettant de satisfaire ces exigences et entrant dans la composition des résines vinylesters de l'invention sont avantageusement les diméthacrylates de bisphénol-A époxydés ou éthoxylés et leurs dérivés. Parmi ces dérivés, on peut cités les diméthacrylates de Bisphénol-A époxydés ou éthoxylés dont le carbone central porte une substitution, comme par exemple un atome de chlore, un atome de soufre ou un groupement aliphatique ramifié ou non; ainsi que les diméthacrylates de bisphénol-A époxydés ou éthoxylés dont le carbone central est remplacé par un atome de chlore ou un atome de soufre.

On préfère plus particulièrement, les diméthacrylates de Bisphénol-A époxydés ou éthoxylés car :
- la présence de deux noyaux phénoliques assure une bonne tenue thermique,
- la présence de liaisons époxydées ou éthoxy- lées assure une bonne tenue chimique,
- la présence des groupements méthacryliques amène une bonne réactivité et assure un excellent vieillissement.

Parmi les diméthacrylates de Bisphénol-A époxydés ou éthoxylés, on préfère tout particulièrement le diméthacrylate de Bisphénol-A époxydé.

Le choix du ou des monomères acryliques associés permet de faire varier presque à l'infini les propriétés des produits obtenus après polymérisation.

Parmi les monomères entrant dans la composition des résines de l'invention, on peut citer :
- l'acide méthacrylique qui assure une bonne rigidité, une bonne tenue à la chaleur et une compatibilité avec de nombreux support et charges,
- les acrylates qui apportent souplesse et aptitude aux collages
- les méthacrylates spéciaux qui apportent une bonne tenue thermique ou un faible retrait de polymérisation, ou encore certaines propriétés spécifiques (hygroscopie, conductibilité, etc... ),
- les méthacrylates fonctionnalisés permettant une compatibilité chimique avec plusieurs supports ou charges (méthacrylates silanés, époxydés, etc...).

A titre de monomère de la famille des acryliques entrant dans la composition des résines vinylester selon l'invention, on préfère tout particulièrement le méthacrylate de méthyle, le méthacrylate d'isobornyl, l'acrylate de diéthyle hexyle, l'acrylate de nonyle, le méthacrylate de dicyclopentaneoxyéthyle et le méthacrylate d'hydroxyéthyle.

De manière avantageuse, les résines vinylesters de l'invention dont la formulation ne comporte pas de méthacrylate de méthylepossède un point éclair environ supérieur à 100° Celsius, et en conséquence présente un caractère ininflammable qui en facilite le transport.

Une composition préférée de résines vinylesters selon l'invention comprend en poids, 20 à 80 % d'un ou plusieurs monomère de la famille des acryliques, et 80 à 10 % d'au moins une macromolécule compatible et copolymérisable.

Les résines de l'invention peuvent contenir en outre des charges minérales ou organiques, tels que des pigments organiques, des plastifiants, des polymères, des silices, des carbonates, des billes de verre. Les résines vinylesters ainsi composées sont utiles pour la fabrication d'objets moulés tels que notamment des éviers, lavabos, receveurs de douche et baignoires, des récipients stérilisables, des pièces résistantes aux solvants et aux hydrocarbures, des dalles décoratives, et des mobiliers urbains ou des sols.

Les résines vinylesters de l'invention peuvent aussi contenir des fibres minérales ou organiques, tels que des fibres de verre, des fibres de carbone, des fibres de bore ou des fibres aramides. Les résines vinylester ainsi composées sont utiles pour la fabrication d'objets en stratifiés tels que les coques de bateaux, des pièces pour l'industrie aéronautique ou automobile, des panneaux de signalisations, des cuves, des éléments de construction, des capotages divers et des structures légères.

Les résines vinylester de l'invention peuvent être aussi utilisées seules en tant que revêtement protecteur de pièces métalliques, de pièces réalisées en composites, de cuves et de sol, d'éléments en bois tels que du mobilier ou des coffrages.

Avantageusement, les résines vinylesters selon l'invention comprennent également un a-accélérateur lorsque la polymérisation est effectuée à froid; cet ac- célarateur est une amine tel que le diméthyl de paratoluidine, il assure la décomposition des péroxydes du catalyseur de polymérisation. Dans le cas ou la polymérisation est effectuée à chaud, à une température d'environ 60° Celsius, il n'est pas nécessaire de recourir a un tel accélérateur car les péroxydes du catalyseur sont décomposés par l'action de la chaleur.

Les résines vinylester de l'invention comprennent donc aussi des catalyseurs de polymérisation, tel que le proxyde de benzyle commercialisé sous la référence CH50 par la Société AKZO.

L'invention concerne également la préparation des résines vinylesters de l'invention soit selon un simple mélange du monomère ou du cocktail de monomères acryliques choisi avec le monomère' de haute masse moléculaire compatible et copolymérisable; soit par synthèse chimique du monomère de haute masse moléculaire compatible et copolymérisable en présence du monomère ou du cocktail de monomères acryliques choisi.

A titre d'exemple, un premier procédé de préparation d'une résine vinylester dans laquelle la macromolécule compatible et copolymérisable est le diméthacrylate de Bisphénol-A époxydé consiste à dissoudre dans le monomère ou le cocktail de monomères acryliques choisi le diméthacrylate de Bisphénol-A époxydé obtenu par évaporation du styrène contenu dans une résine vinylester Derakane (dénomination commerciale) commercialisé par la Société DOW CHEMICAL.

Un second procédé de préparation d'une résine vinylester dans laquelle le monomère de haute masse moléculaire compatible et copolymérisable est le diméthacrylate de Bisphénol-A époxydé consiste à greffer, à chaud, une molécule d'acide (méth)acrylique sur chaque terminaison époxy du Bisphénol-A époxydé commercialisé sous la dénomination d'epikote par la Société SHELL, en présence du monomère ou du cocktail de monomères acryliques choisi.

Outre les caractéristiques qui précèdent, l'invention comporte d'autres caractéristiques et avantages qui apparaîtront au cours de la description qui suit et qui se réfèrent à des exemples de réalisation et de mise en oeuvre de la présente invention, étant entendu que ces exemples ne sauraient constituer une quelconque limitation à la portée des revendications.

### 1 - EXEMPLES DE COMPOSITIONS DE RESINES VINYLESTERS SELON L'INVENTION

### Exemple 1

- Diméthacrylate de Bisphénol-Aépoxydé :59%
- Méthacrylate de méthyle : 40 %
- Paraffine : 0,5 %
- Accélérateur (Diméthyl paratoluidine) : 0,5%

### Exemple 2

- Diméthacrylate de Bisphénol-Aépoxydé 59 %
- Méthacrylate de méthyle : 38 %
- Triméthylol propane triméthacrylate : 2 %
- Paraffine : 0,6 %
- Accélérateur (Diméthyl paratoluidine) : 0,4%

### Exemple 3

- Diméthacrylate de Bisphénol-Aéthoxylé 70 %
- Acrylate de nonyle : 26 %
- Triméthylol propane triméthacrylate : 3 %
- Paraffine : 0,6 %
- Accélérateur (Diméthyl paratoluidine) : 0,4%

### Exemple 4

- Diméthacrylate de Bisphénol-Aépoxydé :49%
- Méthacrylate d'isobornyl : 50 %
- Paraffine : 0,6 %
- Accélérateur (Diméthyl paratoluidine) :0,4%

### Exemple 5

- Diméthacrylate de Bisphénol-Aéthoxylé 44 %
- Méthacrylate de dicyclopentaneoxyéthyle : 25%
- Acrylate de nonyle : 30 %
- Paraffine : 0,5 %
- Accélérateur (Diméthyl paratoluidine) :0,5%

### Exemple 6

- Diméthacrylate de Bisphénol-Aépoxydé :43%
- Méthacrylate d'isobornyl : 30 %
- Acrylate de nonyle : 25 %
- Paraffine : 0,5 %
- Accélérateur (Diméthyl paratoluidine) :0,5%

### II- EXEMPLES D'UTILISATIONS DES RESINES VINYLESTERS DES EXEMPLES PRECEDENTS

### Exemple 7

Une résine selon l'exemple 1, additionnée de 3 % en poids d'un catalyseur commercialisé sous la référence CH50 par la Société AKZO, puis mélangée à deux fois son poids de silice de granulométrie 80 microns polymérise en 40 minutes à température ambiante.

Le produit obtenu est très rigide et ne présente pas de déformation jusqu'à une température de 130° Celsius.

### Exemple 8

Une résine selon l'exemple 2, additionnée de 3 % en poids d'un catalyseur commercialisé sous la référence CH50 par la Société AKZO, et étalée en couche mince, polymérise en 45 minutes à température ambiante pourdonnerun film rigide insoluble dans la plupart des solvants. On ne constate aucun ramollissement de ce film jusqu'à une température de 130° Celsius.

### Exemple 9

Une résine selon l'exemple 3, additionnée de 3 % en poids d'un catalyseur est étalée en couche mince sur un support. Après polymérisation, on vient recouvrir cette couche par un stratifié polyester/fibres de verre. Une fois le stratifié durci, l'ensemble est séparé du support. On obtient alors un stratifié revêtu d'un "gel coat". Ce revêtement confère d'excellentes propriétés de surface au stratifié, notamment en ce qui concerne sa résistance aux agressions chimiques et aux taches.

### Exemple 10

Une résine selon l'exemple 4, additionnée de 2 % en poids d'un catalyseur polymérise en masse en 15 minutes à température ambiante. Le polymère ainsi obtenu résiste à une température de 150° Celsius.

### Exemple 11

Une résine selon l'exemple 5, additionnée de 3 % en poids d'un catalyseur est mélangée avec 3 fois son poids d'une composition de charges de silice (sables) de granulométrie comprise entre 80 microns et 2 mm. Ce mélange, utilisé comme béton, est étalé au sol. Après polymérisation, le béton ainsi obtenu présente des caractéristiques de souplesse, de résistance thermique et d'inertie chimique supérieures à ce qui connu à ce jour.

### Exemple 12

Une résine selon l'exemple 6, additionnée de 3 % en poids d'un catalyseur est utilisée comme résine de stratification de résine de fibres de verre. Après polymérisation, le produit obtenu présente des caractéristiques mécaniques et de résistance chimique et thermiques supérieures à celles des résines polyesters.

## Revendications

1) Résine vinylester caractérisée en qu'elle est constituée de un ou plusieurs monomères de la famille des acryliques, d'au moins un monomère de haute masse moléculaire compatible et copolymérisable, de paraffine, et en ce que elle est dépourvue d'eau.

2) Résine vinylester selon la revendication 1, caractérisée en ce que le monomère de haute masse moléculaire compatible est copolymérisable à chaud ou à température ambiante.

3) Résine vinylester selon l'une des revendications 1 à 2, caractérisée en ce que le monomère de haute masse moléculaire compatible et copolymérisable est un diméthacrylate de Bisphénol-Aépoxydé ou éthoxylé ou un de ses dérivés.

4) Résine vinylester selon la revendication 3, caractérisée en ce que les dérivés de diméthacrylate de Bisphénol-A époxydé ou éthoxylé sont choisis parmi les diméthacrylates de Bisphénol-A époxydés ou éthoxylés dont le carbone central porte une substitution, tel qu'un atome de chlore, un atome de soufre ou un groupement aliphatique ramifié ou non, et les diméthacrylates de Bisphénol-A époxydés ou éthoxylés dont le carbone central est remplacé par un atome de chlore ou un atome de souffre.

5) Résine vinylester selon l'une des revendications 1 à 4, caractérisée en ce que les monomères de la famille des acryliques sort choisis parmi : l'acide méthacrylique, les acrylates, les méthacrylates spéciaux, les méthacrylates fonctionnalisés.

6) Résine vinylester selon la revendication 5, caractérisée en ce que les monomères de la famille des acrylique sont choisis parmi : le méthacrylate de méthyle, le méthacrylate d'isobornyl, l'acrylate de diéthyle hexyle, l'acrylate de nonyle, le DCPOEMA, le méthacrylate d'hydroxyéthyle.

7) Résine vinylester selon l'une des revendications 1 à 6, caractérisée en ce qu'elle comprend en poids, 20 à 80 % d'un ou plusieurs monomère de la famille des acryliques, et 80 à 10 % d'au moins un monomère de haute masse moléculaire compatible et copolymérisable.

8) Résine vinylester selon l'une des revendications 1 à 7, caractérisée en ce qu'elle comprend en outre un accélérateur de décomposition des peroxydes tel que le diméthyl de paratoluidine.

9) Résine vinylester selon l'une quelconque des revendications 1 à 8, caractérisée par la composition suivante :
- Diméthacrylate de Bisphénol-Aépoxydé : 59 %
- Méthacrylate de méthyle : 40 %
- Paraffine : 0,5 %
- Accélérateur (Diméthyi paratoiuidine) :0,5%

10) Résine vinylester selon l'une quelconque des revendications 1 à 8, caractérisée par la composition suivante :
- Diméthacrylate de Bisphénol-Aépoxydé 59 %
- Méthacrylate de méthyle : 38 %
- Triméthylol propane triméthacrylate : 2 %
- Paraffine : 0,6 %
- Accélérateur (Diméthyl paratoluidine) :0,4%

11) Résine vinylester selon l'une quelconque des revendications 1 à 8, caractérisée par la composition suivante :
- Diméthacrylate de Bisphénol-Aéthoxylé 70 %
- Acrylate de nonyle : 26 %
- Triméthylol propane triméthacrylate : 3 %
- Paraffine : 0,6 %
- Accélérateur (Diméthyi paratoiuidine) :0,4%

12) Résine vinylester selon l'une quelconque des revendications 1 à 8, caractérisée par la composition suivante :
- Diméthacrylate de Bisphénol-Aépoxydé :49%
- Méthacrylate d'isobornyl : 50 %
- Paraffine : 0,6 %
- Accélérateur (Diméthyi paratoluidine) :0,4%

13) Résine vinylester selon l'une quelconque des revendications 1 à 8, caractérisée par la composition suivante :
- Diméthacrylate de Bisphénol-Aéthoxylé 44 %
- Méthacrylate de dicyclopentane oxyéthyle . 25%
- Acrylate de nonyle : 30 %
- Paraffine : 0,5 %
- Accélérateur (Diméthyl paratoluidine) : 0,5 %

14) Résine vinylester selon l'une quelconque des revendications 1 à 8, caractérisée par la composition suivante :
- DiméthacrylatedeBisphénol-Aépoxydé :43%
- Méthacrylate d'isobornyl : 30 %
- Acrylate de nonyle : 25 %
- Paraffine : 0,5 %
- Accélérateur (Diméthyl paratoluidine) : 0,5 %

15) Résine vinylester selon l'une des revendications 1 à 14, caractérisée en ce qu'elle comprend en outre un catalyseur de polymérisation tel que le peroxyde de benzoyle.

16) Résine vinylester selon l'une des revendications 1 à 15, caractérisée en ce qu'elle comprend en outre des charges minérales ou organiques.

17) Résine vinylester selon l'une des revendications 1 à 15, caractérisée en ce qu'elle comprend en outre des fibres minérales ou organiques.

18) Objet moulé caractérisé en ce qu'il est constitué d'une résine vinylester selon l'une des revendications 1 à 17.

19) Revêtement protecteur caractérisé en ce qu'il est constitué d'une résine vinylester selon l'une des revendications 1 à 17.

20) Objet en stratifié caractérisé en ce qu'il est constitué d'une résine vinylester selon l'une des revendications 1 à 17.

21) Sol caractérisé en ce qu'il est constitué d'une résine vinylester selon l'une des revendications 1 à 17.

22) Procédé de préparation d'une résine vinylester dans laquelle le monomère de haute masse moléculaire compatible et copolymérisable est le diméthacrylate de Bisphénol-A époxydé caractérisé en ce que l'on dissout dans le monomère ou le cocktail de monomères acryliques choisi le diméthacrylate de Bisphénol-A époxydé obtenu par évaporation du styrène contenu dans une résine vinylester.

23) Procédé de préparation d'une résine vinylester dans laquelle le monomère de haute masse moléculaire compatible et copolymérisable est le diméthacrylate de Bisphénol-A époxydé caractérisé en ce que l'on greffe , à chaud, une molécule d'acide (méth)acrylique sur chaque terminaison époxy du Bisphénol-A époxydé, en présence du monomère ou du cocktail de monomères acryliques choisi.
